# EUROPÄISCHE PATENTSCHRIFT

(11) **EP 0 277 111 B1**
(45) Veröffentlichungstag und Bekanntmachung des Hinweises auf die Patenterteilung: **24.03.1993**
(21) Anmeldenummer: 88890014.9
(22) Anmeldetag: 26.01.1988
(51) Int. Cl.: H01B 13/14, B29C 47/06

(54) **Verfahren und Vorrichtung zum Herstellen von isolierten Drähten**
Method and device for producing insulated wires
Procédé et dispositif pour fabriquer des fils isolés

(30) Priorität: 27.01.1987 AT 150/87
(43) Veröffentlichungstag der Anmeldung: 03.08.1988
(73) Patentinhaber: Rosendahl Maschinen Gesellschaft m.b.H., 2246 Maria Enzersdorf-Südstadt (AT)
(72) Erfinder: Kerschbaum, Kurt, A-3400 Klosterneuburg (AT); Balka, Franz, A-2380 Perchtoldsdorf (AT)
(74) Vertreter: Gibler, Ferdinand, Dipl.Ing. Dr. techn.

(56) Entgegenhaltungen:
- DE-B- 1 222 656
- US-A- 3 752 617

## Beschreibung

Die Erfindung bezieht sich auf ein Verfahren zum Herstellen von isolierten Drähten mit mindestens zwei in ihrer Färbung und/oder in ihrem Material unterschiedlichen Isolationsschichten, wobei die unterschiedlich gefärbten bzw. unterschiedlichen Materialien den Düsenzuführungen eines Farbwechselspritzkopfes zugeführt werden, und beim Wechseln der Färbung bzw. des Materials nach Fertigstellung einer Drahtcharge und Übergang auf die nächste Drahtcharge die Anspeisung der Düse geändert wird, wobei aber die Gesamtfördermenge konstant gehalten wird.

Bei einem solchen bekannten Verfahren zur Herstellung von Drähten mit einer z.B. zweischichtigen Isolation wurde bisher in der Weise vorgegangen, daß der zu der Herstellung der inneren Schicht vorgesehene Materialstrang vor dem geplanten Wechsel der Farbe mit jenen Pigmenten versetzt wird, die nach dem Wechsel an der Außenschicht erscheinen sollen. Ist die geplante Produktionslänge erreicht, so wird lediglich die Anspeisung des Farbwechselspritzkopfes wechselweise geändert. Dadurch wird der die Außenschichte spritzende Teil des Farbwechselspritzkopfes mit jenem Materialstrang versorgt, der vor dem Wechsel den die Innenschichte spritzende Teil des Farbwechselspritzkopfes versorgt hat.

Dieses Verfahren kann jedoch lediglich in Fällen angewandt werden, in denen die Volumina der beiden Schichten pro Laufmeter fertigen Drahtes gleich sind. Diese Einschränkung bringt jedoch den Nachteil, daß entsprechend starke Außenschichten aufgebracht werden müssen, woraus ein entsprechend hoher Verbrauch an Pigmenten resultiert.

Weiters wurde durch die DE-B-12 22 656 ein Verfahren der eingangs erwähnten art bekannt, bei dem zwei Extruderköpfe über Mehrwege-Drehschieber wechselweise zwei Ringkanäle einer vom zu ummantelnden Draht durchsetzen Kopfes mit plastifiziertem Material versorgen.

Dabei ist der eine Ringkanal vom Draht und der Wand einer Bohrung gebildet ist und der zweite Ringkanal von der inneren Ummantelung des Drahtes und der Wand einer weiteren koaxial zur ersten Bohrung verlaufendne größeren Bohrung gebildet.

Im Falle eines Wechsels der Schichten werden einfach die beiden Mehrwege-Drehschieber synchron umgestellt. Dabei arbeiten die beiden Extruder mit unveränderter Drehzahl weiter Damit haftet auch diesem Verfahren der Mangel an, daß die jeweiligen Schichten gleiche Volumina pro Laufmeter des Drahtes aufweisen müssen. Damit ist es nicht möglich die äußere stark mit Pigmenten versetzte Schicht beliebig dünn herzustellen, wodruch sich eine Verschwendung an Pigmenten ergibt.

Ziel der Erfindung ist es diese Nachteile zu vermeiden und ein Verfahren der eingangs erwähnten Art vorzuschlagen, das es ermöglicht den Einsatz teurer Materialien möglichst gering zu halten.

Erfindungsgemäß wird dies dadurch erreicht, daß die Drähte mit unterschiedliche Volumina pro Meter Länge aufweisenden Schichten von Isoliermaterial versehen werden, wobei beim Wechsel der Farbe bzw. des Materials der äußeren Schicht die Fördermengen für die einzelnen Schichten geändert werden.

Durch diese Maßnahmen ist es möglich die äußere Schichte dünn auszubilden. Außerdem fallen in einem solchen Fall bei einem Wechsel der Farbe der äußeren Schichte nur relativ wenige Meter Draht an, bei denen die Schichten nicht sauber getrennt sind. Dies ist durch das anteilsmäßig wesentlich höhere Volumen pro Meter des Drahtes der Innenschichte im Vergleich zur Außenschichte bedingt.

Nach einem weiteren Merkmal der Erfindung kann vorgesehen sein, daß zum Wechseln der Färbung der äußeren Schicht vorerst die Fördermenge des die Strichmarkierung der inneren Schicht versorgenden Materialstranges bei gleichzeitiger Änderung der Fördermenge des die innere Schicht bildenden Stranges samt Strichmarkierung versorgenden Materialstränge an die Fördermenge des die Strichmarkierung der äußeren Schicht versorgenden Materialstranges angeglichen wird, wonach die die einzelnen gleichartigen Düsen eines Farbwechselspritzkopfes versorgenden Materialstränge wechselweise vertauscht werden und die Fördermenge der vorher die innere Schicht und die äußere Strichmarkierung versorgende Materialstränge auf die ursprünglichen Fördermengen der vorher die äußere Schicht und die innere Strichmarkierung versorgenden Materialstränge gebracht werden.

Auf diese Weise ist es auch bei relativ komplitziert aufgebauten Drähten möglich, auf sehr einfache Weise die Färbung der äußeren Schicht zu wechseln. Dabei ergeben sich nur sehr kleine Mengen an Ausschuß während des Farbwechsels.

Um mit einer geringeren Menge an Pigmenten das Auslangen zu finden, kann weiters vorgesehen sein, daß der bzw. die zur Bildung der inneren Schicht und gegebenenfalls der inneren Strichmarkierung vorgesehene(n) Materialstrang bzw. Materialstränge erst knapp vor Einleitung eines Farbwechsels mit den gewünschten Farben der späteren äußeren Schichte bzw. äußeren Farbmarkierung entsprechenden Pigmenten versetzt werden und die Pigmentzugabe zu den nach der Umschaltung zur Bildung der inneren Schicht und gegebenenfalls der inneren Strichmarkierung vorgesehenen Materialstränge spätestens zum Zeitpunkt des Tausches der Anspeisung der einzelnen Düsen des Farbwechselspritzkopfes eingestellt wird, wobei es besonders vorteilhaft ist, wenn mit der Pigmentierung des bzw. der einen Materialstranges bzw. -stränge zu einer Zeitspanne vor dem Tauschen der Anspeisung der einzelnen Düsen begonnen bzw. diese eingestellt wird, die der Zeit entspricht, die der betreffende Materialstrang zum Durchströmen der Strecke vom Ort der Pigmentzugabe bis zur Düse benötigt. Durch diese Verfahrensführung ergibt sich nur ein geringer Bedarf an Pigmenten, wobei die äußere Schicht relativ dünn gehalten werden kann.

Bei Fehlen von Strichmarkierungen ist es bei der Herstellung insbesondere eines dreilagigen Isolationsaufbaues, wobei die äußere und inneren mindestens zwei insbesondere drei Schichten der Isolation verschieden gefärbt sind und in der Umschalteinrichtung eines Farbwechselspritzkopfes wechselweise in die äußere Lage gebracht werden, im Sinne einer Ausschußminimierung, besonders vorteilhaft wenn in Weiterbildung der Erfindung so vorgegangen wird, daß zum Wechseln der Farbe der äußeren Schicht vorerst die Fördermenge des die innere Schicht versorgenden Materialstranges bei gleichzeitiger Änderung der Fördermenge des die mittlere Schicht bildenden Materialstranges an die Fördermenge des die äußere Schicht versorgenden Materialstranges angeglichen wird, wonach die die einzelnen gleichartigen Düsen eines Farbwechselspritzkopfes versorgenden Materialstränge wechselweise vertauscht werden und anschließend die Fördermenge des vorher die äußere Schicht versorgenden Materialstranges bei gleichzeitiger Änderung der Fördemenge des die mittlere Schicht versorgenden Materialstranges an die ursprüngliche Fördermenge des vorher die innere Schicht versorgenden Materialstranges angeglichen wird, wobei aber die Gesamtfördermenge aller Materialstränge ständig konstant gehalten wird.

Ein weiteres Ziel der Erfindung ist es, eine Einrichtung zur Durchführung des erfindungsgemäßen Verfahrens vorzuschlagen. Bei einer Einrichtung zur Durchführung des Verfahrens mit mindestens zwei zur Versorgung eines Farbwechselspritzkopfes zur Herstellung von Isolationsschichten vorgesehenen Extrudern sowie gegebenenfalls weiteren Strichextrudern zur Versorgung von Düsen eines Farbwechselspritzkopfes zur Herstellung von Strichmarkierungen, wobei zwischen den Extrudern und den zugeordneten Düsen Umschalteinrichtungen zur wechselweisen Versorgung der Düsen zwischengeschaltet sind, wobei für die Extruder und die Umschalteinrichtungen eine Steuerung mit Sollwerteingabeeinrichtungen vorgesehen sind, wird erfindungsgemäß vorgeschlagen, daß die Sollwerteingabeeinrichtungen für die Extruder und die Strichextruder mit den Eingängen je einer Steuerschaltung, gegebenenfalls über Signalwandler und über einen Addierer verbunden sind, wobei die Steuerkreise ausgangsseitig mit zwischen die Sollwerteingabeeinrichtungen und Sollwertgebern zwischengeschalteten Rampenschaltungen zur Steuerung des Überganges von einem zu einem anderen Wert verbunden sind, und die Steuerschaltungen im Sinne einer Konstanthaltung der Summe der den einander zugeordneten Extrudern und Strichextrudern vorgegebenen Sollwerten, wie auch einer Konstanthaltung der Summe der allen Extrudern vorgegebenen Sollwerten beeinflußt werden, wobei jedem Extruder und jedem Strichextruder eine Regelschaltung zur Nachführung des Istwertes zugeordnet ist, die mit dem zugeordneten Sollwertgeber verbunden ist. Diese Maßnahmen ermöglichen es, auch bestehende Einrichtungen auf relativ einfache Weise nachzurüsten.

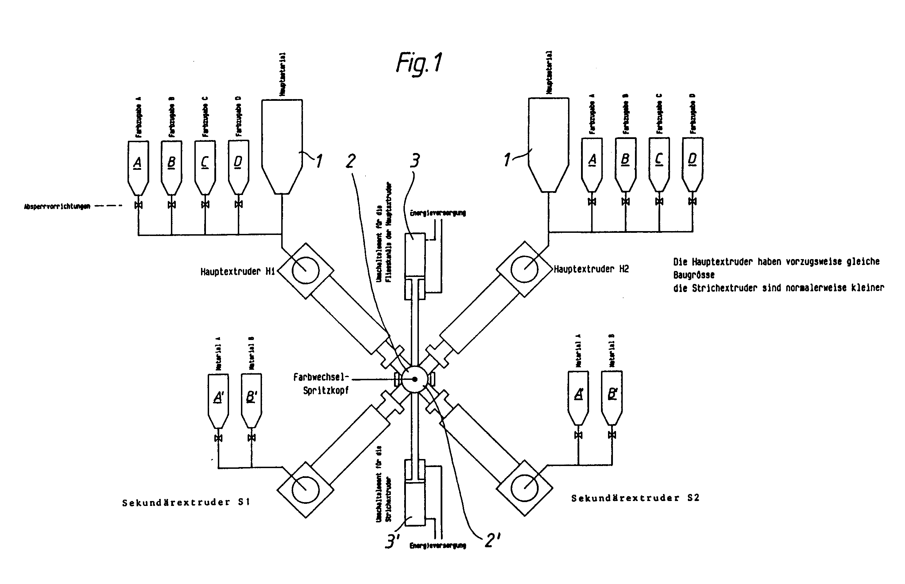

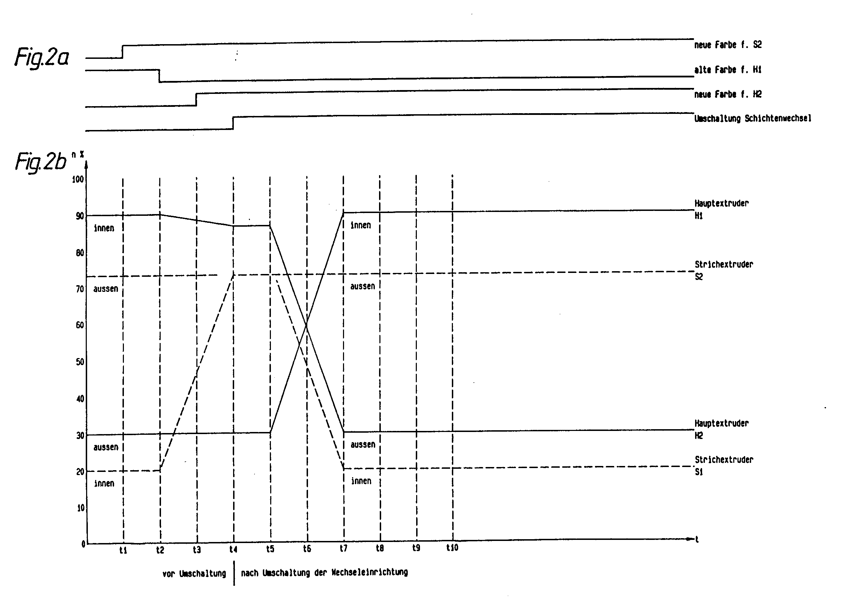

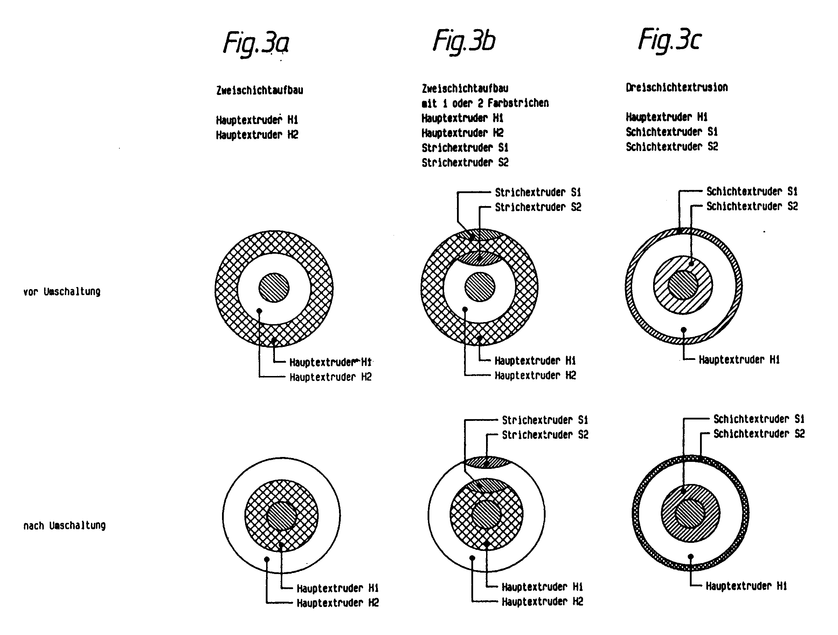

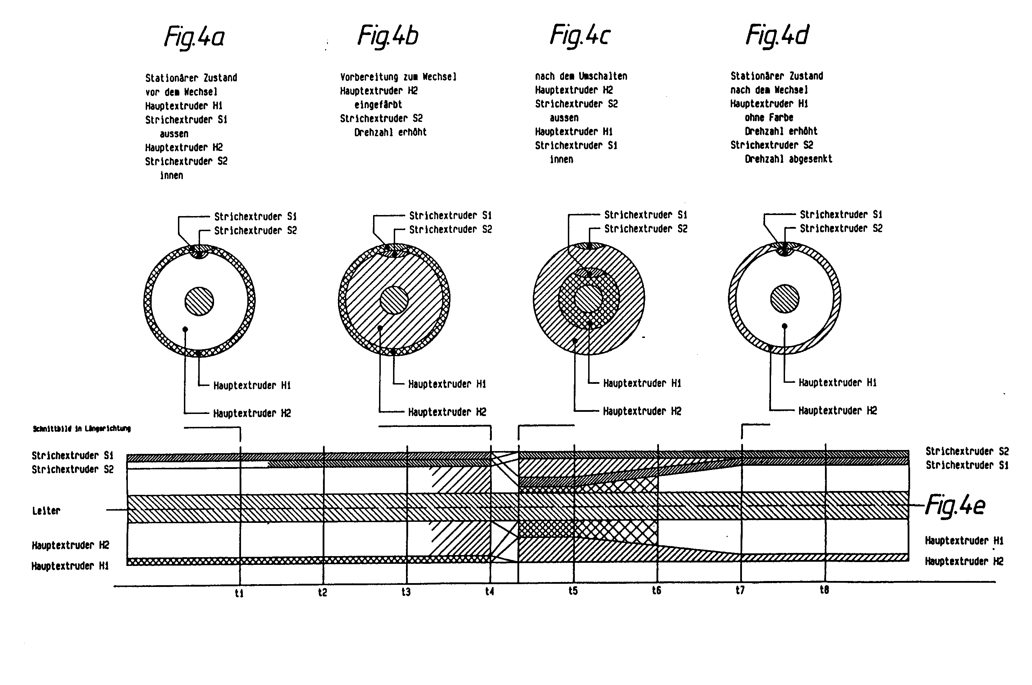

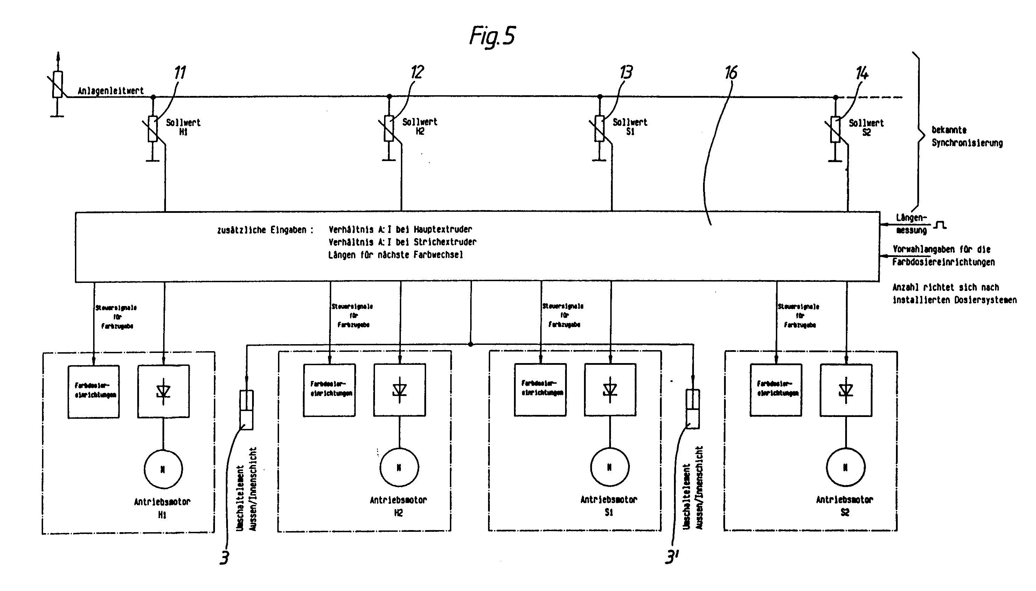

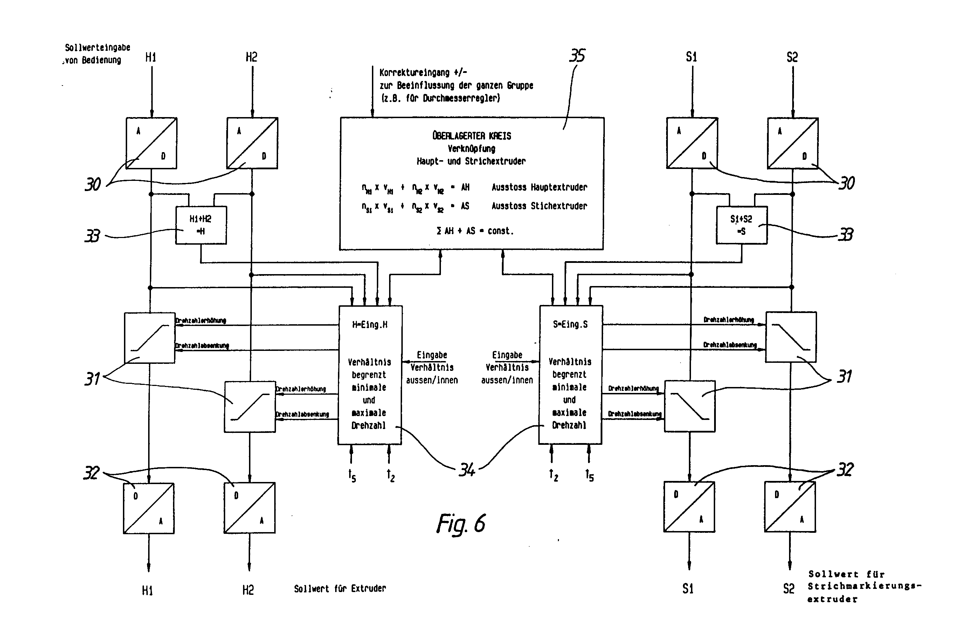

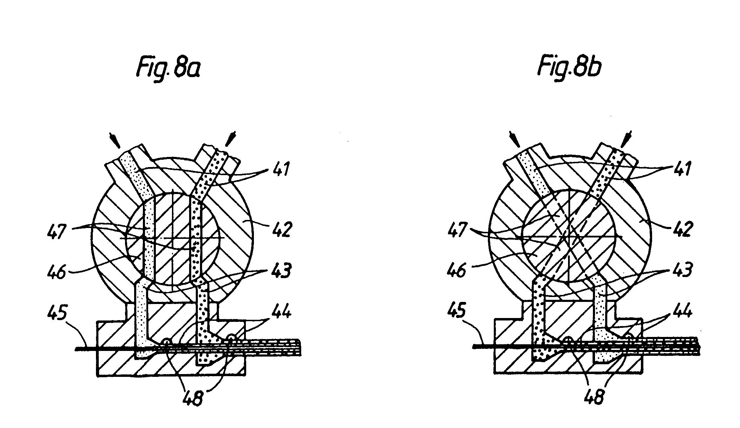

Die Erfindung wird nun an Hand der Zeichnung näher erläutert. Dabei zeigt Fig. 1 schematisch eine erfindungsgemäße Einrichtung, Fig. 2a und 2b Diagramme der Farb- bzw. Pigmentzugabe bzw. des Massedurchsatzes der zum Farbwechselspritzkopf führenden Materialstränge, Fig. 3a bis 3c Querschnitte verschiedener Drahtkonstruktionen, Fig. 4a bis 4d Querschnitte eines Drahtes mit zwei Isolationsschichten und Strichmarkierungen bei einer Farbumschaltung, Fig. 4e schematisch die Änderungen bei einem Farbwechsel im Längsschnitt, Fig. 5 bis 7 schematisch die Steuerung der Einrichtung gemäß Fig. 1 und Fig. 8a und 8b schematisch einen Farbwechselspritzkopf.
Die Einrichtung gemäß Fig. 1 weist zwei Extruder H1, H2 und zwei Strichextruder S1, S2 auf. Die beiden Extruder H1, H2, die beide getrennt mit einem entsprechenden Granulat aus einem Vorratsbehälter 1 und wahlweise mit verschiedenen in Behältern A bis D befindlichen Farb-, bzw. Pigmentzusätzen beschickbar sind, fördern zu einer Umschalteinrichtung 2, die Teil eines Farbwechselspritzkopfes ist. Mit dieser Umschalteinrichtung 2 ist es möglich, die Anspeisung der die innere Schicht und des die äußere Schicht auf die Seele aufbringenden Düsen des Farbwechselspritzkopfes wechselweise zu vertauschen, wobei sich z.B. die Farbe der äußeren Schicht ändern läßt.

Die beiden Strichextruder S1, S2 sind von zwei verschiedenen Behältern A', B' wahlweise beschickbar und fördern ebenfalls zu einer Umschaltevorrichtung 2', über die zwei zu der Herstellung einer Strichmarkierung vorgesehene Düsen eines Farbwechselspritzkopfes vorsorgbar sind. Dabei ist für jede der beiden Umschaltvorrichtungen 2, 2' eine eigene Betätigungseinrichtung 3,3' vorgesehen.

Das erfindungsgemäße Verfahren wird nun an Hand der Fig. 2a und 2b, sowie Fig. 3b und 4a bis 4d erläutert. Dabei wird von einem Draht ausgegangen, der zwei Isolationsschichten mit je einer Strichmarkierung aufweist, wobei die innere Schicht und die innere Strichmarkierung gegebenenfalls auch farblos sein können, um die Farbmaterialien einzusparen.

Soll eine Änderung der Farbe der äußeren Schicht und der äußeren Strichmarkierung vorgenommen werden, so wird zum Zeitpunkt t1 die neue Farbe der äußeren Strichmarkierung dem Strichextruder S2, der vorerst die die innere Strichmarkierung aufbringende Düse des Farbwechselspritzkopfes versorgt, zugesetzt (Fig. 4a). Zum Zeitpunkt t2 wird die Farbzufuhr zum Extruder H1, der vorerst die die äußere Schicht aufbringende Düse des Farbwechselspritzkopfes versorgt, unterbrochen, was sich aber, wie aus Fig. 4e zu ersehen ist, erst zu einem späteren Zeitpunkt t4 auf das in Herstellung begriffene Produkt auswirkt. Gleichzeitig wird begonnen, die Drehzahl des Strichextruders S2 und damit die von diesem geförderte Materialmenge auf jenen Wert zu erhöhen, den der Strichextruder S1 liefert, und die Fördermenge des Extruders H2 dabei so weit zu reduzieren, daß die Summe der Fördermengen des Extruders H2 und des Strichextruders S2 konstant bleiben.

Zum Zeitpunkt t3 wird dem Extruder H2 die neue Farbe zugesetzt, der nach dem Wechsel den die äußere Schicht aufbringenden Spritzkopf versorgt. Auch dies wirkt sich auf den in Herstellung begriffenen Draht erst mit einer gewissen Verzögerung aus und zwar zwischen den Zeitpunkten t3 und t4, wie durch die Schraffur in Fig. 4e angedeutet ist.

Haben sich die Fördermengen des Extruders H2 und des Sekundärextruders S2 auf die vorgesehenen Werte zum Zeitpunkt t4 (Fig. 4b) eingestellt, so werden beide Umschalteinrichtungen 2, 2' umgesteuert. Die Umschaltung erfolgt in sehr kurzer Zeit; die Zeit t4 bis t5 dient der Prozeßstabilisierung und zum Abklingen von Einschwingvorgängen.

Durch diese Verfahrensführung ergibt sich die in Fig. 4d dargestellte Änderung der Färbung der äußeren Schichte und der äußeren Strichmarkierung. Dabei kommt es lediglich während der Zeitspanne zwischen t4 und t4' zu einer unsicheren Färbung des erzeugten Drahtes und somit nur zu einem geringen Anfall von Ausschuß. Der zwischen den Zeitpunkten t4' und t7 erzeugte Draht ist ohne weiters verwendbar und in der geänderten Farbzusammenstellung eingefärbt, wenngleich dieser Draht eine stärkere Durchfärbung aufweist als der ab dem Zeitpunkt t7 erzeugte, wie dies aus Fig. 4e zu ersehen ist. Aus dieser ergibt sich auch, daß der vom Zeitpunkt t1 bis zum Zeitpunkt t4 erzeugte Draht an seiner äußeren Färbung dem vor dem Zeitpunkt t4 erzeugten Draht entspricht. Daraus ist zu ersehen, daß durch einen Farbwechsel lediglich geringe Mengen an unrein gefärbtem Draht anfallen.

Das Verahren läßt sich aber auch bei Drähten mit lediglich zwei Schichten in vereinfachter Weise anwenden. Dabei sind dann nur die die Farbbeaufschlagung der Extruder H1, H2 betreffenden Schritte zu den Zeitpunkten t2 und t3 vorzunehmen und zum Zeitpunkt t4 die Umschaltung vorzunehmen, wonach die Fördermengen der beiden Extruder unter Konstanthaltung der Gesamtfördermenge entsprechend geändert werden müssen. In Fig. 3a sind die Querschnitte eines solchen Drahtes vor und nach der Umschaltung dargestellt, wobei die Farben durch Schraffur bzw. Fehlen einer solchen angedeutet sind.

In Fig. 3c ist ein dreilagiger Schichtaufbau der Isolation vorgesehen, wobei die Schicht mit dem größten Volumen pro Laufmeter die mittlere Schicht ist, die vorzugsweise nicht eingefärbt wird. Dabei wird bzw. werden gemäß dem erfindungsgemäßen Verfahren die zur Aufbringung der innersten und äußersten Schicht vorgesehenen Extruder so gesteuert, wie die von einem Hauptextruder bei dem vorstehend beschriebenen Beispiel. Dies gilt erfindungsgemäß auch für Fig. 3a.

Fig. 5 zeigt schematisch die Steuerung der Einrichtung gemäß Fig. 1. Dabei sind von Hand aus einstellbare Sollwertgeber 11,12,13,14,15 für die Drehzahlen und damit auch die Fördermengen der Extruder H1,H2 und der Strichextruder S1,S2 mit einer Steuereinheit 16 verbunden. Diese Steuereinheit umfaßt weiters nicht dargestellte Eingaben für die gewünschte Produktionslängen bis zum nächsten Farbwechsel, für das Verhältnis der Außen- zu Innenschichte und das Volumensverhältnis der Strichmarkierungen pro Meter, sowie Eingaben zur Vorwahl der Farben ferner ist eine Längenmeßeinrichtung 24 vorgesehen.

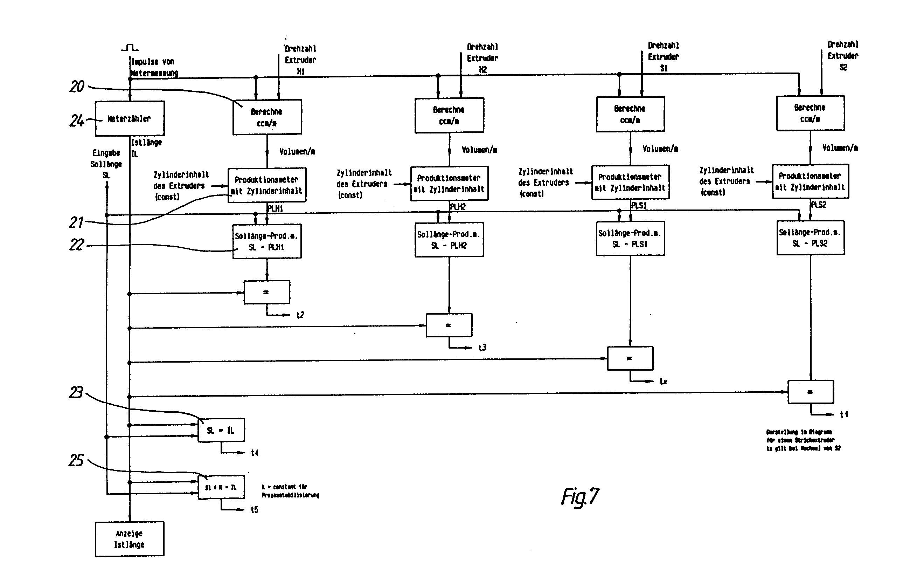

Diese Steuereinheit liefert Steuersignale für die Farbdosiereinrichtungen A,B,C,D,A',B', für die Antriebsmotore der zugehörigen Extruder H1,H2 bzw. Strichextruder S1,S2, sowie für die Antriebe 3,3' der Umschaltvorrichtungen 2,2'. Wie aus Fig. 7 ersichtlich ist, weist die Steuereinheit für jeden Extruder H1,H2 und Strichextruder S1,S2 getrennt zugeordnete Rechner 20,21,22 auf, die aus den von der Längenmeßeinrichtung kommenden Signalen und der Drehzahl des zugehörigen Extruders den Materialverbrauch pro Meter errechnen, wobei den Rechnern 21 die Inhalte der entsprechenden Zylinder eingebbar sind. Weiters errechnen die Rechner 22 aus dem eingegebenen Sollwert der Produktionslänge und dem Ausgangssignal des zugeordneten Rechners 21 die Zeitpunkte t1,t2 und t3, wobei t1 entweder von dem dem StrichextruderS1 oder dem dem Strichextruder S2 zugeordneten Rechner 22 errechnet wird, je nach dem welcher Extruder, die die äußere Strichmarkierung aufbringende Düse des Farbwechselspritzkopfes nach dem Wechsel versorgt. Ähnliches gilt auch bezüglich der Zeitpunkte t2 und t3, wobei jener Rechner t2 ermittelt, der jenem Extruder zugeordnet ist, der vor dem Wechsel die die äußere Schicht aufbringenden Düse des Farbwechselspritzkopfes versorgt.

Der Zeitpunkt t4 für die Umschaltung wird von einem Vergleicher 23 ermittelt, der den Sollwert der Produktionslänge mit den vom Meterzähler 24 kommenden Signalen vergleicht.

Weiters ist noch ein weiterer Vergleicher 25 vorgesehen, der den Sollwert um eine vorgegebene Größe K, die der zu der Stabilisierung der Verhältnisse benötigten Zeit entspricht, erhöht und mit dem vom Meterzähler 24 kommenden Istwert vergleicht und ein den Zeitpunkt t5 bestimmendes Signal abgibt. Der Meterzähler selbst verwertet die von der Längenmeßeinrichtung kommenden Signale und setzt diese in Meter entsprechende Signale um, die einer Anzeigeeinheit 26 zugeführt werden.

Die Regelung der Drehzahl der Motore der einzelnen Extruder H1,H2,S1,S2 erfolgt nach Sollwerten, die von einem eingenen Steuerkreis festgelegt werden. Dieser umfaßt den Sollwertgebern 11 bis 14 nachgeschaltete Analog-Digitalwandler 30, die über Rampenschaltungen 31 zur Festlegung der Änderungsgeschwindigkeit der Signale bzw. Sollwerte mit Digital-Analogwandlern 32 jeweils verbunden sind, die ihrerseits den Sollwerten für die einzelnen Motore oder deren Steuereinrichtungen entsprechende Signale liefern.

Weiters sind die den Extrudern H1,H2 bzw. den Strichextrudern S2,S2 zugeordneten Wandler 30 mit je einem Addierer 33 verbunden.

Die Addierer 33 und die jeweils zugehörigen Wandler 30 und Rampenschaltungen 31 sind mit je einer Steuerschaltung 34 verbunden, der die die Zeitpunkte t2 und t5 markierenden Signale, sowie die Eingaben für das entsprechende Volumsverhältnis Außen- zu Innenschicht zugeführt werden. Letzteres begrenzt die minimale und die maximale Drehzahl. Weiters sind die Steuerschaltungen 34 mit einem Rechner 35 verbunden, der die beiden Steuerschaltungen miteinander verknüpft und dafür sorgt, daß die gesamte Fördermenge aller vier Extruder konstant bleibt, wobei dieser Wert aber einstellbar bzw. korrigierbar ist.

So wird durch ein dem Zeitpunkt t2 entsprechendes Signal bewirkt, daß die Drehzahl des einen Strichextruders erhöht, jene des ebenfalls die innere Schicht versorgenden Hauptextruders entsprechend vermindert wird, wie dies aus Fig. 2b zu ersehen ist. Weiters wird durch ein dem Zeitpunkt t5 entsprechendes Signal die Drehzahl des einen Extruders erhöht und jene des anderen Extruders und des nach der Umschaltung die innere Strichmarkierung versorgenden Sekundärextruders vermindert, wobei die gesamte Fördermenge aber konstant bleibt.

Das erfindungsgemäße Verfahren und die Vorrichtung zur Durchführung desselben arbeiten im Zusammenhang mit Farbwechselspritzköpfen bekannter Bauform und Funktionsweise, wobei Fig. 8 eine mögliche Bauform eines solchen Farbwechselspritzkopfes zeigt, ohne daß die Erfindung aber auf diese Bauform beschränkt ist.

Der Farbwechselspritzkopf gemäß Fig. 8 weist ein mit Einlässen 41 die von je einem Extruder gespeist werden, versehenes Gehäuse 42 auf, in dem Kanäle 43 angeordnet sind, die zu Düsen 44 führen, die die extrudierten Materialstränge auf den Drahtkern 45 schichtweise aufbringen und diesen ummanteln.

Die Verbindung zwischen den Einlässen 41 und den Kanälen 43 erfolgt über einen im Gehäuse 42 bewegbaren Kern 46, der mit Kanälen 47 durch-setzt ist. Dabei ist für jeden Einlaß 41 eine Düse 44, ein Kanal 43 und ein Kanal 47 vorgesehen. Allerdings sind in dem Kern zwei Paare von Kanälen 47 angeordnet, von denen die Ränder des einen im wesentlichen parallel verlaufen, die des anderen dagegen einander kreuzen, ohne jedoch miteinander in Verbindung zu stehen. Dabei sind bei dem dargestellten Ausführungsbeispiel eines Farbwechselspritzkopfes diese Paare von Kanälen 47 in axialer Richtung des Kernes 46 voneinander distanziert. Das Umschalten von einer Farbe auf eine andere erfolgt dabei einfach durch ein axiales Verschieben des Kernes in dem Gehäuse 42, wodurch es entweder zu einer Verbindung der Einlässe mit den Kanälen 42 über die im wesentlichen parallel verlaufenden Kanäle 47 des Kernes 46 oder über dessen gekreuzt verlaufende Kanäle 47 erfolgt, wodurch eine Änderung der Anspeisung der Düsen gegeben ist.

Die für die Aufbringung der Strichmarkierung vorgesehenen Düsen 48 weisen eine mit der gemeinsamen Achse der beiden Düsen 44 einen Winkel einschließende Achse auf, und werden ebenfalls über nicht dargestellte Kanäle und diese mit entsprechenden Einlässen verbindende, im Kern 46 angeordnete Kanäle mit dem extrudierten Material versorgt. Dabei sind ebenfalls Paare von im Kern 46 angeordneten Kanälen vorgesehen, von denen die Kanäle in dem einen Paar im wesentlichen parallel und die des anderen Paares gekreuzt verlaufen. Damit ergeben sich auch im Hinblick auf die die Strichmarkierungen aufbringenden Düsen die gleichen Verhältnisse wir für die Düsen 44.

Eine weitere Möglichkeit der Ausbildung eines Farbwechselspritzkopfes besteht darin, den Kern 46 mit einem Paar einander kreuzender Kanäle und einem Paar parallel verlaufender Kanäle zu versehen, wobei aber diese Paare von Kanälen um einen Winkelbetrag gegeneinander versetzt werden, sodaß die Farbumschaltung durch Verdrehen des Kernes 46 erfolgen kann.

Zusammenfassend sei festgehalten, daß das erfindungsgemäße Verfahren nicht auf den Farbwechsel beschränkt ist sondern in gleicher Weise bei Verwendung von unterschiedlichen Materialien für die einzelnen Schichten, aber auch in Kombination Farb- und Materialwechsel zur Anwendung gelangen kann. Bei dem oben erwähnten Farbwechselspritzkopf handelt es sich dann sinngemäß um einen hinsichtlich seiner Funktion völlig gleichartigen Materialwechselspritzkopf.

## Patentansprüche

1. Verfahren zum Herstellen von isolierten Drähten mit mindestens zwei in ihrer Färbung und/oder in ihrem Material unterschiedlichen Isolationsschichten, wobei die unterschiedlich gefärbten bzw. unterschiedlichen Materialien den Düsenzuführungen eines Farbwechselspritzkopfes zugeführt werden, und beim Wechseln der Färbung bzw. des Materials nach Fertigstellung einer Drahtcharge und Übergang auf die nächste Drahtcharge die Anspeisung der Düse geändert wird wobei aber die Gesamtfördermenge konstant gehalten wird, dadurch gekennzeichnet, daß die Drähte mit unterschiedliche Volumina pro Meter Länge aufweisenden Schichten von Isoliermaterial versehen werden, wobei beim Wechsel der Farbe bzw. des Materials der äußeren Schicht die Fördermengen für die einzelnen Schichten geändert werden.

2. Verfahren nach Anspruch 1 zur Herstellung von mit je einer verschiedenfarbigen Strichmarkierung versehenen Schicht, wobei zum Wechseln der Färbung der äußeren Schichten vorerst die Fördermenge des die Strichmarkierung der inneren Schicht versorgenden Materialstranges bei gleichzeitiger Änderung der Fördermenge des die innere Schicht bildenden Stranges samt Strichmarkierung versorgenden Materialstränge an die Fördermenge des die Strichmarkierung der äußeren Schicht versorgenden Materialstranges angeglichen wird, wonach die die einzelnen gleichartigen Düsen eines Farbwechselspritzkopfes versorgenden Materialstränge wechselweise vertauscht werden und die Fördermengen der vorher die innere Schicht und die äußere Strichmarkierung versorgende Materialstränge auf die ursprünglichen Fördermengen der vorher die äußere Schicht und die innere Strichmarkierung versorgenden Materialstränge gebracht werden.

3. Verfahren nach Anspruch 1 zur Herstellung eines drei- oder mehrlagigen Isolationsaufbaus, wobei die äußere und inneren mindestens zwei, insbesondere drei Schichten der Isolation verschieden gefärbt sind und in der Umschalteinrichtung eines Farbwechselspritzkopfes wechselweise in die äußere Lage gebracht werden, wobei zum Wechseln der Farbe der äußeren Schicht vorerst die Fördermenge des die innere Schicht versorgenden Materialstranges bei gleichzeitiger Änderung der Fördermenge des die mittlere Schicht bildenden Materialstranges an die Fördermenge des die äußere Schicht versorgenden Materialstranges angeglichen wird, wonach die die einzelnen gleichartigen Düsen eines Farbwechselspritzkopfes versorgenden Materialstränge wechselweise vertauscht werden und anschließend die Fördermenge des vorher die äußere Schicht versorgenden Materialstranges bei gleichzeitiger Änderung der Fördermenge des die mittlere Schicht versorgenden Materialstranges an die ursprüngliche Fördermenge des vorher die innere Schicht versorgenden Materialstranges angeglichen wird.

4. Verfahren nach Anspruch 1, 2 oder 3, wobei der bzw. die zur Bildung der inneren Schicht und gegebenenfalls der inneren Srichmarkierung vorgesehene(n) Materialstrang bzw. Materialstränge erst knapp vor Einleitung eines Farbwechsels mit den gewünschten Farben der späteren äußeren Schicht bzw. äußeren Farbmarkierung entsprechenden Pigmenten versetzt werden und die Pigmentzugabe zu den nach der Umschaltung zur Bildung der inneren Schicht und gegebenenfalls der inneren Strichmarkierung vorgesehenen Materialstränge spätestens zum Zeitpunkt des Tauschens der Anspeisung der einzelnen Düsen eines Farbwechselspritzkopfes eingestellt wird.

5. Verfahren nach Anspruch 4, wobei mit der Pigmentierung des bzw. der Materialstranges bzw. -stränge zu einer Zeitspanne vor dem Tauschen der Anspeisung der einzelnen Düsen begonnen bzw. diese eingestellt wird, die der Zeit entspricht, die der betreffende Materialstrang zum Durchströmen der Strecke vom Ort der Pigmentzugabe bis zur Düse benötigt.

6. Einrichtung zur Durchführung des Verfahrens nach einem der Ansprüche 1 bis 5 mit mindestens zwei zur Versorgung eines Farbwechselspritzkopfes zur Herstellung von Isolationsschichten vorgesehenen Extrudern sowie gegebenenfalls weiteren Strichextrudern zur Versorgung von Düsen eines Farbwechselspritzkopfes zur Herstellung von Strichmarkierungen, wobei zwischen den Extrudern und den zugeordneten Düsen Umschalteinrichtungen zur wechselweisen Versorgung der Düsen zwischengeschaltet sind, wobei für die Extruder und die Umschalteinrichtungen eine Steuerung mit Sollwerteingabeeinrichtungen vorgesehen sind, dadurch gekennzeichnet, daß die Sollwerteingabeeinrichtungen (11, 12, 13, 14) für die Extruder (H1, H2) und die Strichextruder (S1, S2) mit den Eingängen je einer Steuerschaltung (34), gegebenenfalls über Signalwandler (30) und über einen Addierer (33), verbunden sind, wobei die Steuerkreise ausgangseitig mit zwischen die Sollwerteingabeeinrichtungen (11, 12, 13, 14) und Sollwertgebern (32) zwischengeschalteten Rampenschaltungen (31) zur Steuerung des Überganges von einem zu einem anderen Wert verbunden sind, und die Steuerschaltungen (34) weiters mit einem Rechner (35) verbunden sind, der die Steuerschaltungen (34) im Sinne einer Konstanthaltung der Summe der den einander zugeordneten Extrudern und Strichextrudern (H1, S1, H2, S2) vorgegebenen Sollwerten, wie auch einer Konstanthaltung der Summe der allen Extrudern vorgegebenen Sollwerten beaufschlagt, wobei jedem Extruder (H1, H2) und jedem Strichextruder (S1, S2) eine Regelschaltung zur Nachführung des Istwertes zugeordnet ist, die mit dem zugeordneten Sollwertgeber (32) verbunden ist.

## Claims

1. Process for producing insulated wires having at least two insulating layers, different in their colouring and/or in their material, the differently coloured or different materials being fed to the die feeds of a colour-change extrusion head and, when changing the colouring or the material after completion of one wire batch and changing over to the next wire batch, the feeding of the die being changed, although the overall feed rate is kept constant, characterised in that the wires are provided with layers of insulating material having different volumes per metre length, the feed rates for the individual layers being changed when changing the colour or the material of the outer layer.

2. Process according to Claim 1 for producing layers provided with a differently coloured line marking, in which process, for changing the colouring of the outer layer, first of all the feed rate of the material strand supplying the line marking of the inner layer is matched to the feed rate of the material strand supplying the line marking of the outer layer, while at the same time changing the feed rate of the strand forming the inner layer together with the material strands supplying line marking, after which the material strands supplying the individual, identical dies of a colour-change extrusion head are alternately exchanged and the feed rates of the material strands previously supplying the inner layer and the outer line marking are brought to the original feed rates of the material strands previously supplying the outer layer and the inner line marking.

3. Process according to Claim 1 for producing a three-layered or multi-layered insulation structure, the outer and inner at least two, in particular three, layers of the insulation being differently coloured and being brought alternately into the outer position in the switching device of a colour-change extrusion head, in which process, for changing the colour of the outer layer, first of all the feed rate of the material strand supplying the inner layer is matched to the feed rate of the material strand supplying the outer layer, while at the same time changing the feed rate of the material strand forming the middle layer, after which the material strands supplying the individual, identical dies of a colour-change extrusion head are alternately exchanged and subsequently the feed rate of the material strand previously supplying the outer layer is matched to the original feed rate of the material strand previously supplying the inner layer, while at the same time changing the feed rate of the material strand supplying the middle layer.

4. Process according to Claim 1, 2 or 3, the material strand or material strands provided for forming the inner layer and, if appropriate, the inner line marking having added to them just before the introduction of a colour change pigments corresponding to the desired colours of the later outer layer or outer colour marking, respectively, and the pigment addition to the material strands intended for forming the inner layer and, if appropriate, the inner line marking after the switch-over being adjusted at the latest at the time of the changing-over of the feeding of the individual dies of a colour-change extrusion head.

5. Process according to Claim 4, pigmenting of the material strand or material strands commencing or being adjusted at a time interval before changing-over of the feeding of the individual dies which corresponds to the time which the material strand concerned requires for flowing through the section from the point of pigment addition to the die.

6. Apparatus for carrying out the process according to one of Claims 1 to 5, having at least two extruders, provided for supplying a colour-change extrusion head for producing insulating layers, as well as, if appropriate, further line extruders for supplying dies of a colour-change extrusion head for producing line markings, there being interposed between the extruders and the assigned dies switching devices for alternately supplying the dies, a control with setpoint entry devices being provided for the extruders and the switching devices, characterised in that the setpoint entry devices (11, 12, 13, 14) for the extruders (H1, H2) and the line extruders (S1, S2) are connected to the inputs of, in each case, an open-loop control circuit (34), if appropriate via signal converters (30) and via an adder (33), the open-loop control circuits being connected on the output side to ramp circuits (31), interposed between the setpoint entry devices (11, 12, 13, 14) and setpoint generators (32), for controlling the transition from one value to another, and the open-loop control circuits (34) being, furthermore, connected to a computer (35), which acts on the control circuits (34) in such a way as to keep constant the sum of the setpoints preselected for the mutually assigned extruders and line extruders (H1, S1, H2, S2), as well as keeping constant the sum of the setpoints preselected for all the extruders, each extruder (H1, H2) and each line extruder (S1, S2) being assigned a closed-loop control circuit for correcting the actual value, which circuit is connected to the assigned setpoint generator (32).

## Revendications

1. Procédé pour fabriquer des fils isolés possédant au moins deux couches d'isolant différentes l'une de l'autre par leur coloration et/ou par leur matière, dans lequel les matières différentes par leur couleur et/ou Par elles-mêmes sont acheminées aux arrivées des buses d'une tête d'injection à changement de couleur et, lors du changement de la coloration ou de la matière après fabrication d'une charge de fil et passage à la charge de fil suivante, l'alimentation de la buse est modifiée mais avec maintien du débit total à une valeur constante, caractérisé en ce que les fils sont munis de couches de matière isolante qui présentent des volumes différents par mètre de longueur, les débits qui alimentent les différentes couches étant modifiés lors du changement de couleur ou de la matière de la couche extérieure.

2. Procédé selon la revendication 1, pour la fabrication de couches munies chacune d'un marquage linéaire d'une couleur différente, dans lequel, pour changer la coloration de la couche extérieure, tout d'abord le débit de la veine de matière qui alimente le marquage linéaire de la couche intérieure est rendu égal, avec modification simultanée du débit de la veine qui forme la couche intérieure, y compris les veines de matière qui alimentent le marquage linéaire, au débit de la veine de matière qui alimente le marquage linéaire de la couche extérieure, après quoi les veines de matière qui alimentent les différentes buses de même genre d'une tête d'injection à changement de couleur sont permutées et les débits des veines de matière qui alimentaient précédemment la couche intérieure et le marquage linéaire extérieur sont portés aux débits d'origine des veines de matière qui alimentaient précédemment la couche extérieure et le marquage linéaire intérieur.

3. Procédé selon la revendication 1, pour la fabrication d'une structure d'isolant à au moins trois couches, dans lequel la couche extérieure et les au moins deux, notamment trois, couches intérieures de l'isolant sont colorées différemment, et sont placées alternativement dans la couche extérieure dans le dispositif de commutation d'une tête d'injection à changement de couleur, et dans lequel, pour le changement de la couleur de la couche extérieure, tout d'abord le débit de la veine de matière qui alimente la couche intérieure est rendu égal, avec modification simultanée du débit de la veine de matière qui forme la couche centrale, au débit de la veine de matière qui alimente la couche extérieure, après quoi les veines de matière qui alimentent les différentes buses de même genre d'une tête d'injection à changement de couleur sont permutées et, ensuite, le débit de la veine de matière qui alimentait précédemment la couche extérieure est rendu égal, avec modification simultanée du débit de la veine de matière alimentant la couche centrale, au débit d'origine de la veine de matière qui alimentait précédemment la couche intérieure.

4. Procédé selon la revendication 1, 2 ou 3, dans lequel la veine ou les veines de matière prévue(s) pour former la couche intérieure et éventuellement le marquage linéaire intérieur ne sont chargées de pigments correspondants aux couleurs désirées de la future couche extérieure ou du futur marquage coloré extérieur que juste avant le déclenchement d'un changement de couleur, et l'addition de pigments aux veines de matière qui seront prévues après la commutation pour former la couche intérieure et éventuellement le marquage linéaire intérieur est interrompu au plus tard à l'instant du changement de l'alimentation des différentes buses d'une tête d'injection à changement de couleur.

5. Procédé selon la revendication 4, dans lequel, on commence ou on interrompt respectivement la pigmentation de la ou des veine(s) de matière un certain temps avant le changement de l'alimentation des différentes buses, ce temps correspondant au temps nécessaire pour que la veine de matière considérée parcourre le trajet entre le point d'addition du pigment et la buse.

6. Dispositif pour la mise en oeuvre du procédé selon les revendications 1 à 5, comprenant au moins deux extrudeuses prévues pour l'alimentation d'une tête d'injection à changement de couleur destinée à la fabrication de couches d'isolant, ainsi qu'éventuellement d'autres extrudeuses de rayures prévues pour l'alimentation de buses d'une tête d'injection à changement de couleur destinée à la fabrication de marquages linéaires, dans lequel des dispositifs de commutation pour l'alimentation alternée des buses sont intercalés entre les extrudeuses et les buses correspondantes, et dans lequel il est prévu pour les extrudeuses et les dispositifs de commutation une commande munie de dispositifs d'introduction de valeurs de consigne, caractérisé en ce que les dispositifs (11, 12, 13, 14) d'introduction des valeurs de consigne pour les extrudeuses (H1, H2) et pour les extrudeuses de rayures (S1, S2) sont reliés aux entrées d'un circuit de commande (34) correspondant, éventuellement à travers des convertisseurs de signaux (30) et à travers un additionneur (33), les circuits de commande sont reliés, côté sortie, à des circuits à rampe (31), intercalés entre les dispositifs (11, 12, 13, 14) d'introduction des valeurs de consigne et les générateurs (32) de valeurs de consigne, pour la commande du passage d'une valeur à une autre valeur, et les circuits de commande (34) sont reliés par ailleurs à un calculateur (35) qui charge les circuits de commande (34), de façon voulue pour maintenir constante la somme des valeurs de consigne imposées aux extrudeuses et aux extrudeuses de rayures (H1, S2, H2, S2) associées ainsi que pour maintenir constante la somme des valeurs de consigne imposées à toutes les extrudeuses, cependant qu'à chaque extrudeuse (H1, H2) et à chaque extrudeuse de rayure (S1, S2), est associé un circuit de régulation servant à suivre la valeur réelle et qui est relié au générateur de valeur de consigne (32) associé.
